# EUROPEAN PATENT SPECIFICATION

(11) **EP 0 847 355 B1**
(45) Date of publication and mention of the grant of the patent: **18.11.2009**
(21) Application number: 96929626.8
(22) Date of filing: 29.08.1996
(51) Int. Cl.: B62D 61/00, B62D 47/02, B60K 8/00

(54) **MOTOR VEHICLE**
MOTORFAHRZEUG
VEHICULE A MOTEUR

(30) Priority: 29.08.1995 SE 9502986
(43) Date of publication of application: 17.06.1998
(73) Proprietor: AB VOLVO, 405 08 Göteborg (SE)
(72) Inventor: ROSENDAHL, Lennart, S-443 32 Lerum (SE)
(74) Representative: Andersson, Per Rune
(86) International application number: PCT/SE1996/001063
(87) International publication number: WO 1997/008041

(56) References cited:
- EP-A- 0 018 036
- EP-A- 0 244 549
- EP-A- 0 417 820
- DE-A- 2 823 519
- DE-C- 4 110 162
- DE-C- 4 201 513

## Description

### TECHNICAL FIELD:

The present invention relates to a motor vehicle according to the preamble of appended claim 1.

### BACKGROUND OF THE INVENTION:

In the field of motor vehicles, especially buses intended for passenger traffic, there is a need to utilize the space inside the vehicle as effectively as possible. Buses for passenger traffic are normally intended to accommodate a number of passengers (for example 30 persons sitting and 45 persons standing) in a relatively small space.

The maximum number of passengers which a bus can accommodate is related to the wheel base of the bus, i.e. the distance between the wheel axles. Although a bus can be made very long, which provides space for more passengers, such an arrangement also results in a longer wheel base. This gives rise to problems such as reduced manoeuvrability. In conventional buses having front wheel steering this problem is solved by arranging the wheels so as to provide a relatively large overhang of the bus, both at its rear and front. In this manner, the bus is given a relatively short wheel base, which in turn provides good manoeuvrability. One important requirement for today's buses is namely to provide it with steering and road handling capabilities which correspond to other traffic on our roads.

However, a problem in connection with conventional buses having large overhangs is that the floor cannot be made flat. Instead, the wheel housings protrude from under the floor and encroach on the passenger space. Naturally, this implies that the space of the vehicle is not used in a particularly effective manner. Another problem with such an arrangement arises due to the fact that some of the passenger seats are often arranged above these protruding wheel housings (with the intention to optimally utilize the passenger space). Such "elevated" seats can be difficult to sit down upon and rise from, especially for elderly or disabled persons.

Furthermore, conventional buses are usually provided with a driveline (i.e. engine, gearbox and drive shaft) which is situated under the floor. This is also a contributing factor to the passenger space of the bus not being optimally used. It also contributes to the fact that the height of the floor above the ground becomes relatively great. This is a problem since such an arrangement constitutes an obstacle to comfortable boarding for the passengers.

It is true that the engine can be placed furthest away in the rear of the bus, but this also encroaches on the space intended for the passengers.

The patent document US-A-3623568 discloses an electromechanical drive system for an automotive vehicle with a mechanical engine with an electric generator and an electric driving motor.

Furthermore, the document EP-A-0 417 820 teaches a bus which comprises engines arranged for operating pumps which in turn feed pressurized hydraulic fuel to hydraulic motors. The bus shown in EP-A-0 417 820 is furthermore a so-called "trolley-bus" which is electrically powered by means of an external power source via an electrical cable.

The document EP-A-0 244 549 teaches a motor vehicle having hydraulically driven wheels and having a driving unit consisting of a driving engine and a hydraulic motor.

Furthermore, the document EP-A-0 069 714 discloses a bus being intended to be used for transports at airports. The bus comprises a thermal engine which is arranged in the roof structure of the bus. Said document is taken as basis for the preamble features of independent claim 1.

Also, the document US-A-3503464 teaches a hybrid-powered vehicle in which a battery-driven electric motor and an engine are combined to alternatively provide propulsion power as a function of a preselected vehicle speed.

### THE OBJECT OF THE INVENTION:

The main object of the present invention is thus to solve the above-mentioned problems and provide a bus in which the passenger space is optimally utilized and which has a high manoeuvrability, i.e. having characteristics which correspond to the demands which are put on today's road-traffic vehicles. These objects are achieved by means of a device as initially mentioned, the characterizing features of which will be apparent from the characterizing part of claim 1.

The motor vehicle according to the invention comprises four wheels which are situated at the corners of the vehicle, and a driveline arranged above the rear axle and in the roof. In this manner, they do not affect the interior of the bus. This also provides a bus design having a long wheel base at the same time as the total length of the bus can be kept relatively short.

The transmission of power from the internal combustion engine to the electric motor is carried out electrically, i.e. non-mechanically, which results in that neither gearbox nor drive shaft will be necessary.

Furthermore, the floor is completely flat with a large and continuous surface, which means that there are no space-demanding elevations for the wheel housings. This also makes it possible to provide the bus with a low height above the ground, for example 320 mm, which results in comfortable alighting and boarding for the passengers. In addition, the bus can be lowered, for example to 170 mm, to further facilitate boarding and alighting. The flat floor also facilitates cleaning of the bus.

To further increase the utilization of the space, the motor vehicle according to the invention is provided with a flat floor which allows the passenger seats to be arranged in a manner which results in a flexible solution which is adapted to varying demands.

According to a preferred embodiment of the invention, it comprises a driver's area which is located substantially directly above the front wheel axle. In combination with large glass areas in connection with the driver's area, this gives the driver a very good overview of the surrounding traffic. It also contributes to a very large continuous flat surface of the bus, which results in effective utilization of the passenger space.

According to a further embodiment of the invention, the vehicle comprises a body in the form of a self-supporting body structure, a so-called integral bus, having its middle part constructed from a framework of strong, suitably extruded, aluminium profiles. This results in a light and at the same time strong design which is also resistant to corrosion and suitable for recycling. At the front and rear, security beams made of steel are provided, the purpose of which is to prevent the roof from being pressed in if the bus overturns. The sides and the front are reinforced with additional beams, and the walls are made stronger than on buses designed according to known technology. The body structure is covered with panels, suitably made from glass fibre reinforced plastic or aluminium, which are fastened by glueing, riveting or similar technology. The panels can also be manufactured from sandwich elements or other laminated constructions.

In the roof of the bus, ventilation channels are provided, suitably in the form of two parallel ducts extending in the longitudinal direction of the bus and on both sides of the accumulator packets and the switching device, from one or more air intakes in the front part of the bus to air outlets in the rear of the bus. From these central ducts smaller ducts extend down into the passenger space of the bus.

### BRIEF DESCRIPTION OF THE DRAWINGS:

The invention will be described in greater detail in the following with reference to the annexed drawings, in which
- Fig. 1: is a perspective view of a motor vehicle in the form of a bus according to the present invention,
- Fig. 2: is a side view of the bus according to Fig. 1 in which the body of the bus is not illustrated, for reasons of clarity,

- Fig. 3: is a view from above of the bus according to Fig. 2,
- Fig. 4: is a perspective drawing of a body structure according to the invention, and
- Fig. 5: is a cross-section along the plane A-A' of Fig. 1, i.e. a cross-section perpendicular to the longitudinal direction of the body structure.

### PREFERRED EMBODIMENT:

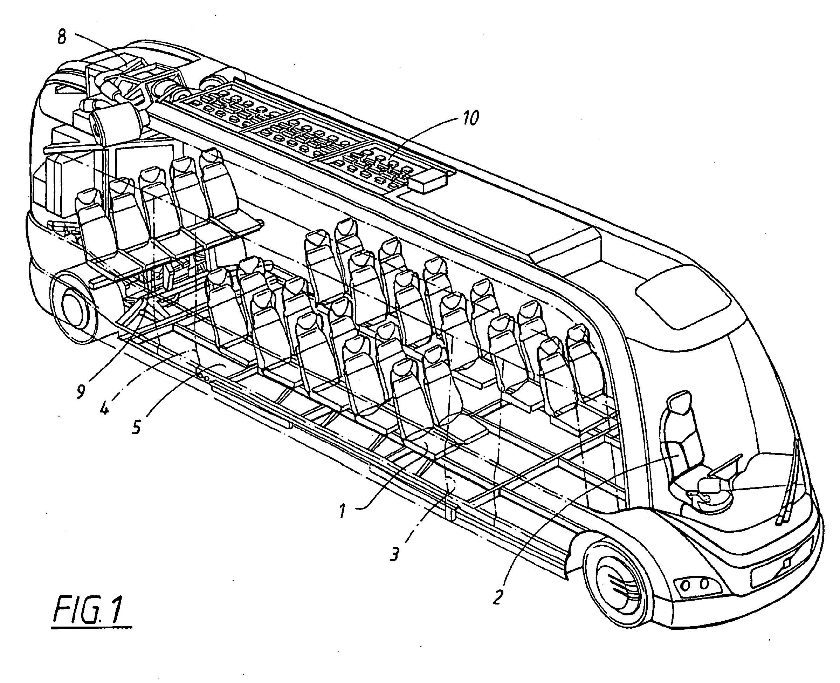

Fig. 1 shows a motor vehicle in the form of a bus according to the present invention. According to a preferred embodiment, the bus is primarily intended for use in public transportation systems. For this reason, the bus comprises a plurality of passenger seats 1 and a driver's seat 2. Furthermore, the bus comprises an entrance 3 and an exit 4.

The bus has a floor 5 which is generally flat. This is made possible for example due to the fact that the wheels of the bus are positioned as far out as possible at the corners of the bus, so as not to affect the interior of the bus.

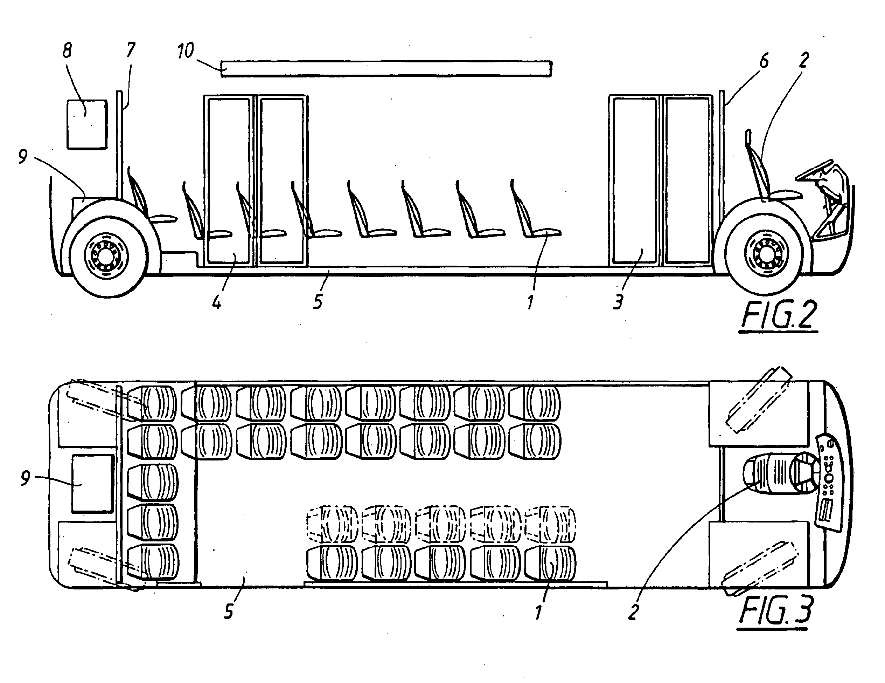

The positioning of the wheels will appear more clearly from Fig. 2. Preferably, the bus according to the invention has a length of 10,7 m. The front wheel axle is arranged at a distance from the front of the bus constituting no more than 15% of the length of the bus, preferably 11% of the length of the bus. The rear wheel axle is arranged at a distance from the rear end of the bus which constitutes no more than 20% of the length of the bus, preferably 10% of the length of the bus.

Fig. 2 also illustrates that the floor 5 of the bus is essentially flat. According to the detailed description below, this is made possible for example due to the fact that no components of the driveline of the bus are arranged under the floor 5, something which otherwise is common in conventional buses. Furthermore, the floor 5 is arranged at a very low height above the ground. Preferably, the height is approximately 320 mm, which contributes to comfortable boarding and alighting for the passengers. By means of a suspension system (not shown), the height can be further reduced during boarding and alighting, preferably to 170 mm.

The bus according to the invention is generally designed around a structure having a particular zone intended for the passengers. This zone is delimited in its front section by means of a first partition 6 which separates the driver's compartment from the passenger zone. At the rear, the zone is delimited by means of a second partition 7.

A combustion engine 8 is arranged in the rear of the bus, behind the second partition 7. Furthermore, an electric motor 9 is arranged in connection with the rear wheel axle (see also Fig. 1). Furthermore, an accumulator pack 10 is arranged in the roof of the bus. This accumulator pack 10 is formed of accumulators which are preferably of the NiMH type (nickel metal hydride), which can be charged by means of the combustion engine 8.

The combustion engine 8 is preferably constituted by a gas turbine consisting of a compressor, a gas turbine, a combustion chamber and a heat exchanger which is adapted to re-use the heat in the exhaust gases and which operates as a sound absorber. The gas turbine can be powered by means of a plurality of different liquid and gaseous fuels, for example ethanol. Furthermore, the gas turbine is built together with an alternating current generator which is operating at the same speed as the gas turbine, preferably approximately 70000 rpm, and which is connected to the electric motor 9. The combustion engine 8 can be operated in two different operating modes, i.e. hybrid operation or accumulator operation. During hybrid operation, the combustion engine 8 drives the bus via the electric motor 9. During those operational conditions in which a low power supply prevails, the combustion engine 8 provides an energy surplus which is stored in the accumulators 10. During the operational conditions which demand a supply of power, energy can be supplied by the accumulators 10. During accumulator operation, the bus is solely operated by means of the accumulators 10, via the electric motor 9. This mode of operation can prevail in environments which require an operation entirely free from exhausts.

The transmission of power from the combustion engine 8 to the electric motor 9 is carried out in an electrical manner, which results in that neither gearbox nor cardan shaft is required. Furthermore, the accumulators 10 are arranged in the roof. This enables the provision of a very low bus having a relatively large, continuous, flat floor area.

According to that shown in Figs. 2 and 3, the driver's seat 2 is generally positioned directly above the front axle of the bus. This results in a good overview of the traffic for the driver. Furthermore, space inside the bus is released so that the passenger space can be used in an optimum manner.

Furthermore, the bus is provided with four wheel steering, i.e. the two wheel axles can be steered independently from each other. The bus comprises an electrical control system (not shown in detail) which controls the angular position of the wheels. In this regard, at low speeds the rear wheels are set at an angle opposite that of the direction of the front wheels, which results in a small turning circle. At a certain speed, preferably approximately 30 km/h, the steering system gradually and automatically switches to so-called active steering, setting all the wheels in the same angular position. The short total length in combination with the four wheel control makes the bus very easily manoeuvered.

In accordance with the embodiment, the bus is also provided with speed-dependent power steering so as to further improve the manoeuvrability. Due to the high centre of gravity of the bus, it is also provided with active suspension, due to increased demands as regards the suspension operation. This results in yet another advantage, i.e. improved comfort for the passengers, since the suspension quickly compensates for any unevenness in the road and also makes the bus very stable as regards rolling.

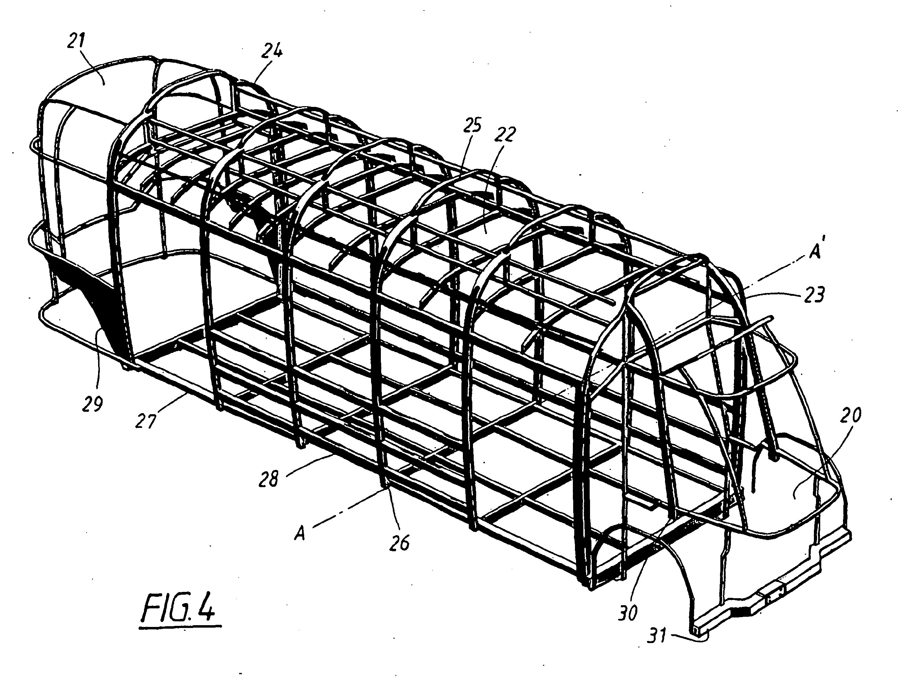

Fig. 4 shows a framework forming a body structure which can be used in a motor vehicle in accordance with the invention, but which is not limited to this application but can also be used for example in other vehicles. The structure has a front section 20 and a rear section 21. Between said sections, a mid section 22 extends from the front section 20 to the rear section 21. A front safety bar 23 is arranged between the front section 20 and the mid section 22. A rear safety bar 24 is arranged between the mid section 22 and the rear section 21. Furthermore, a raised roof section 25 and side bars 26 are illustrated. A floor framework 27 also forms part of the mid section 22 of the body structure.

The safety bars 23 and 24 are preferably manufactured from steel, whereas the mid section 22 is manufactured from strong aluminium profiles, suitably extruded aluminium profiles.

Furthermore, the body structure is reinforced at locations which are exposed to higher forces. Additional cross-beams 28 are provided along the sides. Also, the rear section 21 is reinforced with metal sheets 29 and the front section is reinforced with beams 30 and 31.

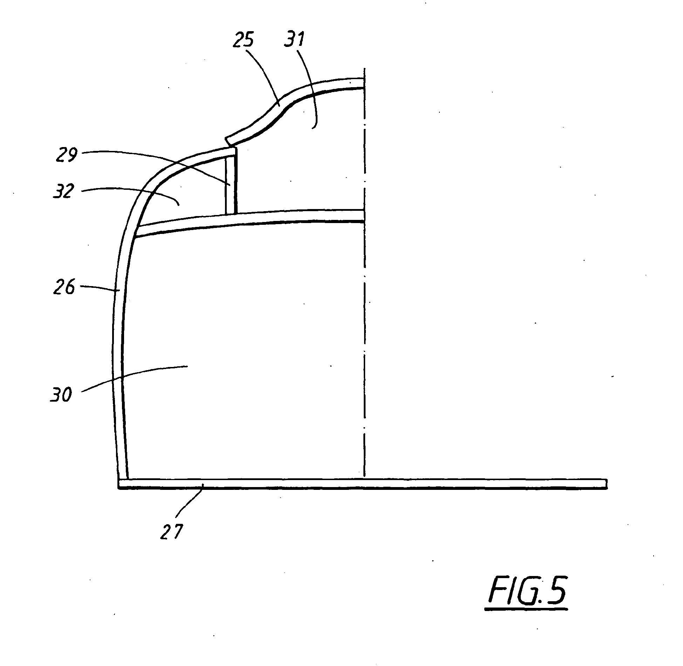

Fig. 5 shows a cross-section as seen from the level of the side bar 26. The passenger space 30 is delimited by the floor 27, the side bars 26 and the roof bar 28. A space 31 for certain details in the driveline of the vehicle, for example the above-mentioned accumulator pack, is delimited by the raised roof section 25, the roof bar 28 and the vertical supports 29. Spaces 32 for ventilation ducts are formed by the side bars 26, the roof bar 28 and the vertical supports 29.

The invention is not limited to the above-mentioned embodiment, but may be varied within the scope of the subsequent claims. For example, the power device can be constituted by a conventional diesel engine or a petrol engine, and the drive device can be in the form of a hydraulic transmission. Furthermore, the device can also be employed in motor vehicles in which more than one front axle or more than one rear axle are used.

## Claims

1. A motor vehicle comprising at least one front axle comprising front wheels, and at least one rear axle comprising rear wheels, of which said at least one front axle and said at least one rear axle are steerable,
a drive device (9) for operating at least the rear axle, and
a power device (8, 10) for supplying power to the drive device (9),
said vehicle comprising a mainly electric transmission from the power device (8, 10) to the drive device (9), wherein said drive device (9) comprises an electric motor arranged in connection and for driving at least said rear axle,
**characterized in that**
said power device (8, 10) comprises an electric accumulator pack (10) which is arranged in connection with a roof of the vehicle; and
said at least one front axle is independently steerable from said at least one rear axle, and wherein in operation and speeds below a certain limit said rear wheels are set at an angle opposite that of a direction of the front wheels, and wherein in operation at speeds above said certain limit said vehicle gradually switches to an operating mode such that said rear wheels and said front wheels are steered on a mutually similar direction.

2. A motor vehicle as claimed in claim 1, **characterized in that** said certain limit corresponds to a speed of substantially 30 km/hour.

3. A motor vehicle according to claim 1, **characterized in that** said vehicle comprises a driver's compartment (2) arranged between the wheels of the front axle, essentially on a longitudinal extending line of said vehicle.

4. A motor vehicle according to claim 1, 2 or 3, **characterized in that** said power device (8, 10) comprises a combustion engine (8) which is arranged above the rear axle and behind a passenger space of said vehicle.

## Patentansprüche

1. Kraftfahrzeug, umfassend zumindest eine Vorderachse mit Vorderrädern und zumindest eine Hinterachse mit Hinterrädern, von denen die zumindest eine Vorderachse und die zumindest eine Hinterachse steuerbar sind,
eine Antriebsvorrichtung (9) zum Betreiben zumindest der Hinterachse und
eine Leistungsvorrichtung (8, 10), um der Antriebsvorrichtung (9) Leistung zuzuführen,
wobei das Fahrzeug eine hauptsächlich elektrische Übertragung von der Leistungsvorrichtung (8, 10) zu der Antriebsvorrichtung (9) aufweist, wobei die Antriebsvorrichtung (9) einen Elektromotor umfasst, der in Verbindung und zum Antreiben zumindest der Hinterachse angeordnet ist,
**dadurch gekennzeichnet, dass**
die Leistungsvorrichtung (8, 10) eine elektrische Akkumulatorpackung (10) umfasst, die in Verbindung mit einem Dach des Fahrzeugs angeordnet ist, und
die zumindest eine Vorderachse unabhängig von der zumindest einen Hinterachse steuerbar ist und wobei die Hinterräder beim Betrieb und bei Geschwindigkeiten unter einer bestimmten Grenze in einem Winkel gegenüber dem einer Richtung der Vorderräder eingestellt werden, und wobei das Fahrzeug beim Betrieb und bei Geschwindigkeiten oberhalb der bestimmten Grenze graduell in einen Betriebsmodus umstellt, so dass die Hinterräder und die Vorderräder in eine zueinander ähnliche Richtung gesteuert werden.

2. Kraftfahrzeug nach Anspruch 1, **dadurch gekennzeichnet, dass** die bestimmte Grenze einer Geschwindigkeit von im Wesentlichen 30 km/Stunde entspricht.

3. Kraftfahrzeug nach Anspruch 1, **dadurch gekennzeichnet, dass** das Fahrzeug ein Führerhaus (2) aufweist, das zwischen den Rädern der Vorderachse, im Wesentlichen auf einer sich längs erstreckenden Gerade des Fahrzeugs angeordnet ist.

4. Motorfahrzeug nach Anspruch 1, 2 oder 3, **dadurch gekennzeichnet, dass** die Leistungsvorrichtung (8, 10) einen Verbrennungsmotor (8) umfasst, der oberhalb der Hinterachse und hinter einem Fahrgastraum des Fahrzeugs angeordnet ist.

## Revendications

1. Véhicule à moteur comprenant au moins un essieu avant comprenant des roues avant, et au moins un essieu arrière comprenant des roues arrière, ledit au moins un essieu avant et ledit au moins un essieu arrière étant orientables,
un dispositif d'entraînement (9) pour actionner au moins l'essieu arrière, et
un dispositif énergétique (8, 10) pour fournir de l'énergie au dispositif d'entraînement (9),
ledit véhicule comprenant une transmission principalement électrique depuis le dispositif énergétique (8, 10) jusqu'au dispositif d'entraînement (9), ledit dispositif d'entraînement (9) comprenant un moteur électrique connecté au moins audit essieu arrière et pour l'entraîner,
**caractérisé en ce que**
ledit dispositif énergétique (8, 10) comprend un bloc d'accumulateur électrique (10) qui est agencé en connexion avec un toit du véhicule ; et
ledit au moins un essieu avant est orientable indépendamment dudit au moins un essieu arrière, et dans lequel en fonctionnement et à des vitesses inférieures à une certaine limite lesdites roues arrière sont établies selon un angle opposée de la direction des roues avant, et dans lequel en fonctionnement à des vitesses au-dessus de ladite certaine limite ledit véhicule commute graduellement vers un mode de fonctionnement tel que lesdites roues arrière et lesdites roue avant sont dirigées dans une direction mutuellement similaire.

2. Véhicule à moteur selon la revendication 1, **caractérisé en ce que** ladite certaine limite correspond à une vitesse sensiblement de 30 km/heure.

3. Véhicule à moteur selon la revendication 1, **caractérisé en ce que** ledit véhicule comprend une cabine de conducteur (2) agencée entre les roues de l'essieu avant, essentiellement sur une ligne s'étendant longitudinalement dudit véhicule.

4. Véhicule à moteur selon la revendication 1, 2 ou 3, **caractérisé en ce que** ledit dispositif énergétique (8, 10) comprend un moteur à combustion (8) qui est agencé au-dessus de l'essieu arrière et derrière un espace passagers dudit véhicule.
